Europäisches Patentamt

**European Patent Office**

Office européen des brevets

(11) Publication number: **0 125 831**
**B1**

# EUROPEAN PATENT SPECIFICATION

(45) Date of publication of patent specification: **30.11.88**

(21) Application number: **84302922.4**

(22) Date of filing: **01.05.84**

(51) Int. Cl.⁴: **H 01 G 1/01,** C 22 C 1/10, B 22 F 1/00

(54) **Ag/Pd electroding powder and preparation thereof.**

(30) Priority: **12.05.83 US 493863**

(43) Date of publication of application:
**21.11.84 Bulletin 84/47**

(45) Publication of the grant of the patent:
**30.11.88 Bulletin 88/48**

(84) Designated Contracting States:
**BE DE FR GB NL**

(56) References cited:
**EP-A-0 067 474**
**DE-A-1 930 273**
**FR-A-2 192 363**
**GB-A-1 004 653**

(73) Proprietor: **SPRAGUE ELECTRIC COMPANY**
**96 Marshall Street**
**North Adams Massachusetts 01247 (US)**

(72) Inventor: **Maher, Galeb Hamid**
**116 Autumn Drive**
**North Adams Massachusetts 01247 (US)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

EP 0 125 831 B1

## Description

This invention relates to a silver and palladium powder suitable for use in making buried electrodes in monolithic ceramic capacitors, and to a method for making such powder and capacitors.

Ceramic formulations used in early monolithic capacitors and even in some present day capacitors must be fired at a high temperature, typically 1400°C, to achieve full sintering and densification. Such capacitors include an all-noble-metal buried electrode, such as pure palladium, which does not lose conductivity through oxidation and which has a melting temperature (1550°C) higher than the above-noted high temperature at which the ceramic is sintered to maturity. Lower melting metals simply flow out of the ceramic during high temperature sintering. High melting base metals, such as iron, are not used because they oxidize and become nonconductive in the oxygen firing atmosphere that is usually required in order to avoid reducing the ceramic. Furthermore, such metal oxides tend to diffuse into the adjacent ceramic and to degrade its electrical characteristics.

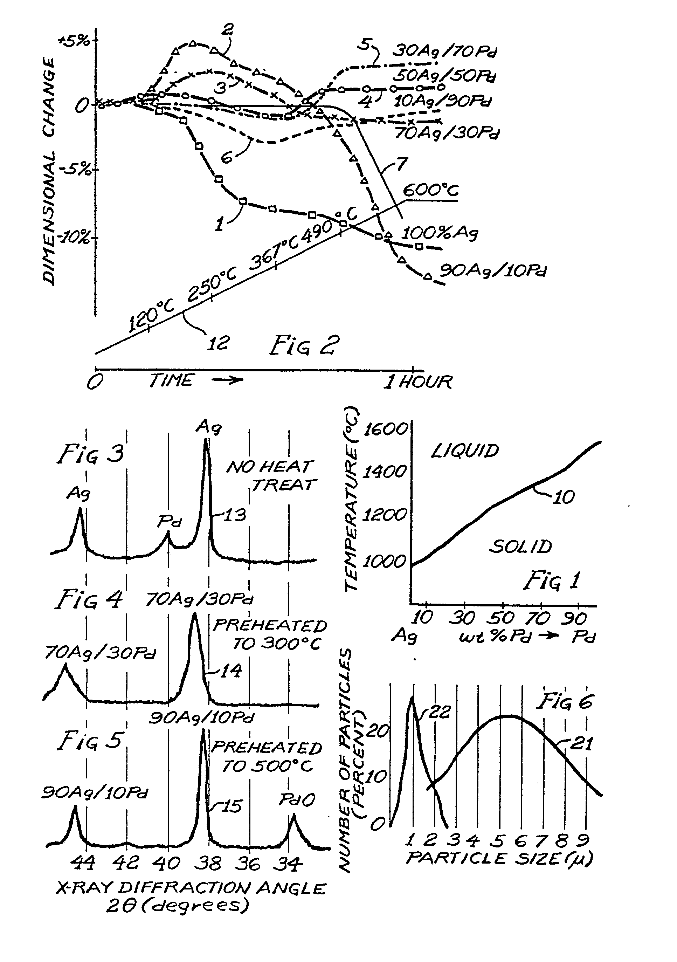

In the monolithic ceramic capacitor industry today, there is a pronounced move toward the use of lower-firing ceramic compositions that may include a sintering aid or flux, usually a glass. The glass first melts and the sintering of the ceramic takes place by the simultaneous process of dissolution and recrystallization. This is known as liquid phase sintering and is described, for example, in U.S. Patent 4,266,265. Most such flux-containing commercial capacitors are now sintered at below 1200°C and include a silver-palladium alloy electrode, typically 70 Ag/30 Pd by weight and having a solidus temperature of 1160°C. Other ceramic compositions without fluxes sinter at such low temperatures, for example as described in U.S. Patent 4,324,750. These ceramics may also employ Ag/Pd alloy electrodes. A great saving is thereby realized through lower energy costs and lower metal costs. The temperatures at which the various silver-palladium alloys are always solid lie below the solids curve 10 of Figure 1 of the accompanying drawings (see below).

It often occurs when firing prior art ceramic capacitors that a significant fraction of a production lot of capacitors is subject to cleaving which usually takes the form of a "delamination" at an interface between an electrode and the ceramic. This leads to a degradation in the electrical properties of the capacitor, such as loss of capacity and shorter life. Such cleaving and degradation becomes more severe as the thickness of the active dielectric layers is reduced.

Delamination in monolithic ceramic capacitors is frequently due to the changing dimensions of the buried electrodes during the early low temperature stage of the ceramic sintering step, which stage is after the organic binder in the ceramic has been burned off and before the ceramic body itself regains strength through sintering.

We have now developed silver and palladium pastes containing powders that may be used in electroding for medium-firing monolithic ceramic capacitor bodies so as to provide more rugged capacitor bodies that do not delaminate or cleave in any fashion. This property is imparted by Ag/Pd alloy powders having a composition, by weight, of 90 Ag/10 Pd and having palladium oxide on the surface of the alloy particles. It is believed that this oxide coating has the effect of raising the temperature at which the alloy will sinter and shrink. (The term "alloy" is used herein to mean a solid solution).

According to the present invention, therefore, there is provided a metal electroding powder for use in making monolithic ceramic capacitors, which powder comprises a silver-palladium alloy powder having a composition, by weight, of 90 Ag/10 Pd and having palladium oxide on the surface of the alloy particles.

The present invention also comprises a method of making a metal electroding powder for use in monolithic ceramic capacitors, which comprises heating in air at about 500°C, a silver-palladium alloy powder containing less than 90% by weight of silver so as to oxidize a portion of the palladium to form palladium oxide at the surface of the alloy particles and to increase the silver content of the alloy until it has a composition, by weight, of 90 Ag/10 Pd.

The 500°C heating step has been shown to cause oxidation of all the palladium from the alloy except enough to leave the more silver-rich alloy composition 90 Ag/10 Pd. The 90 Ag/10 Pd alloy has been found to be a vary stable solid solution that resists further oxidation.

When an electroding powder of this invention is substituted for a conventional Ag/Pd powder mixture in a conventional process for making monolithic ceramic capacitors, negligible dimensional changes occur on sintering in the buried electrodes up to about 500°C. Above 500°C the ceramic body itself begins to sinter and to regain strength. The result is essentially a zero incidence of cleaving and delaminating.

The two component powder of this invention (i.e. Ag/Pd alloy and PdO coating) has several distinct advantages over a simple combination of alloy powder and palladium oxide powder. Since in the powder of this invention each alloy particle has on its surface an intimately associated quantity of palladium oxide, the two components are, essentially, perfectly dispersed with respect to each other. This ensures that during the co-firing of the electrode and ceramic of a mono-lithic ceramic capacitor, there will be no isolated alloy particles to sinter and shrink at the early lower temperatures when the green ceramic cake is weakest, that is at less than 500°C.

The silver-palladium alloy powder which is heated at about 500°C in the method of the invention, is itself preferably prepared by mixing a silver powder with a palladium powder and thoroughly dispersing the two metal powders to form a homogeneous mixture, and heating the mixture to about 300°C to form the desired silver-palladium alloy powder. In this procedure, silver particles diffuse into and alloy with neighbouring palladium particles rather than vice versa, since the diffusion rate of silver into palladium is much greater than that of palladium into silver. It is therefore possible to use as the starting materials, submicron particle size palladium powder (having a surface area of, for example, 6 to 12 $m^2$/gm) and a large particle size silver powder (having a surface area of, for example, less than 4 $m^2$/gm), both of which powders are readily obtainable. More finely divided silver powders are difficult and expensive to obtain.

Photomicrographs taken with a scanning electron microscope seem to reveal the breaking up of large alloy particles, that is having a size of more than one micron, into finer ones owing to the precipitation of PdO along the alloy habit plains and grain boundaries, and owing to the mismatch between the unit cell sizes of PdO and the Ag/Pd alloy. Whatever the mechanism may be, after mechanically deagglommerating the powder which has been heated to about 300°C, it is found to have a very narrow distribution of particle size at about one micron, a substantial proportion of the starting silver particles being much larger. This feature leads to the formation of exceptionally smooth capacitor electrodes that, in turn, lead to higher capacitor breakdown voltages.

In order that the invention may be more fully understood, a series of experiments will now be described which illustrate products and process in accordance with and not in accordance with the invention, the latter being given for the purpose of comparison. In these experiments, reference will be made to the accompanying drawings, in which:

Figure 1 shows a standard solidus curve for alloys of silver and palladium,

Figure 2 is a plot of expansion and contraction of pelleted powders of a series of Ag and Pd metals and alloys thereof and including 90 Ag/10 Pd alloy particles of this invention with PdO surfaces,

Figure 3 is an X-ray diffraction chart of a mixture of pure silver powder with pure palladium powder,

Figure 4 shows the X-ray diffraction chart of the powder mixture of Figure 3 after a heat treatment at up to 300°C,

Figure 5 shows the X-ray diffraction chart of the powder mixture of Figure 3 after a further heating at 500°C, representing a powder of this invention,

Figure 6 is a powder particles population graph as a function of particle sizes for the material represented in Figure 5,

Figures 7 to 11 are thermo-gravinometric analyzer (TGA) graphs plotting weight changes with temperature for five Ag/Pd alloys,

Figures 12 to 16 show X-ray diffraction charts of the above-noted five Ag/Pd alloys after a preheating at 325°C, and

Figures 17 to 21 show X-ray diffraction charts of the above-noted five Ag/Pd alloys after the further heat treatment at 500°C of this invention.

Experiment 1

A series of six blends of silver powder having a characteristic surface area of 3.4 $m^2$/gm, and palladium powder having a characteristic surface area of 11.15 $m^2$/gm, were each formed by the following process with exceptions to be noted.

A slurry was formed by adding 30 gms of metal powder to a solution of 13 gm terpineol, 3.75 gm lecithin and 3.75 gm Quaternary-O (Trade Mark) from Geigy Industrial Chemicals, Ardsley, NY. The latter two ingredients are cationic surfactants (dispersants) that do not decompose below 350°C. The slurry was milled in a polyethylene bottle with high purity alumina beads for 2 hours and then dried at 150°C for 2 hours. The dried blend was then passed through a 20 mesh seive to remove the milling beads. The metal constituents of each of the six powder blends are given in weight percent in Table I:

| | TABLE I | |
| Blend | % Ag | % Pd |
| --- | --- | --- |
| 1 | 100 | 0 |
| 2 | 90 | 10 |
| 3 | 70 | 30 |
| 4 | 50 | 50 |
| 5 | 30 | 70 |
| 6 | 10 | 90 |

In exception to the process described above, a larger amount, namely 4.35 gm. of each surfactant was added to the slurry to better disperse the more palladium rich blends 5, and 6.

Tests were then carried out to determine the dimensional changes of these powders with temperature. Half gram pellets of each were made by pressing the powder to about 50% of theoretical density in a mould of 0.250 inch (6.4 mm) diameter and 0.150 inch (3.8 mm) height. A measurement by dilatometer was made of the expansion and shrinkage of each pellet during a heating cycle which is graphically indicated by curve 12 in Figure 2. These dimensional changes were plotted, as percentages, in Figure 2, with curves 1 to 6 corresponding to blends 1 to 6 of Table I, respectively.

In each of curves 2 to 6, the first expansion corresponds to the alloying of palladium and silver. For example, this expansion occurs in the range from 120°C to 220°C for the composition 90 Ag/10 Pd. It should be noted that much greater expansion will occur when the starting metals are poorly dispersed and is due to oxidation of undispersed palladium. What is needed is 100% contact of Ag particle to Pd particle for optimum dispersal. Good dispersal requires the use of a surfactant.

In a capacitor, the expansion of the electrode material which occurs during electrode alloying contributes to a tendency to delaminate, since it occurs at temperatures below 500°C at which the ceramic is weakest. If the dispersion of silver and palladium powders was not complete, expansion of the electrode material beginning at about 350°C may be partly due to the oxidation of unalloyed free palladium. Electrode metal shrinkage due to sintering of the metal particles, as indicated by the negative slope portions of the curves in Figure 2, is also, by the same reasoning, a source of cleavage and delamination. Oxidation and precipitation of PdO from a Ag/Pd alloy causes little dimensional change, but the oxidation of free particles of pure palladium has a high expansion associated with it.

Experiment 2

Some of the pellets made from blend 3 material, that had not been heated, were heated to 500°C for $2\frac{1}{2}$ hours and cooled. These pellets were then heated at the rate of 10°C/minute while being monitored by the dilatometer for dimensional changes. The result is shown as curve 7 in Figure 2 wherein there was less than 1% expansion up to 500°C, after which shrinkage occurs due to reduction of the PdO, realloying of the reduced palladium, and immediate sintering of the alloy particles that are no longer prevented from sintering by a PdO barrier.

Thus the heat-treated electroding powder of this inveniton is subject to little expansion and exhibits a delayed shrinkage at a temperature over 500°C at which temperature the ceramic is gaining strength. It is preferbaly comminuted again by ball milling or by fluid milling (jet pulverizing) prior to being used for an electroding paste. Such comminuting is preferably carried out to provide a powder having a surface area of from 0.5 to 5.0 $m^2$/gm.

Experiment 3

Pure palladium powder with a surface area of about 12 $m^2$/gm was completely oxidized at 575°C and remained stable to 790°C. At 790°C the PdO began to reduce (the heating being in air) and only pure palladium was left after reaching 880°C. For palladium powders of smaller surface area (larger particle sizes) temepratures above 575°C are required to oxidize the metal completely, but stable oxide PdO is still observed to 790°C and complete reduction is realized at 880°C and higher.

Experiment 4

A mixture of 70% silver and 30% palladium powders (by weight) and dispersed in a water solution containing 1.5%, based on the weight of the metal powders, of the cationic surfactant Quaternary-O (Trade Mark). The slurry was milled with alumina for 2 hours to obtain thorough mixing. The slurry was then dried at 150°C and passed through a 200 mesh screen to remove the alumina. A major portion of the screened powder mixture was heated to 300°C for $2\frac{1}{2}$ hours. Half of that heated material was removed and cooled, while the remainder was heated further to 500°C for $2\frac{1}{2}$ hours.

Thus there were three batches of powder: (A) an unheated silver/palladium mixture; (b) a silver-palladium (solid solution) alloy powder heated to 300°C; and (C) a silver-palladium alloy powder heated to 500°C. Each batch was milled for 8 hours in terpineol as a vehicle and lecithin as a surfactant. Relative to the metal, the terpineol amounted to 47.5 wt% and the lecithin 2.5 wt%; the milling step broke up particle agglomerations. After milling, the vehicle and lecithin dispersant (surfactant) can advantageously serve as principal rheological elements of an electroding ink.

X-ray diffraction traces 13, 14 and 15 of the three powders are illustrated in Figures 3, 4 and 5 corresponding to powders A, B and C, respectively. Trace 13 shows characteristic X-ray diffraction peaks for pure silver and pure palladium. Trace 14 shows characteristic diffraction peaks for the solid solution 70 wt% with silver and 30 wt% palladium; it will be noted that there is no free silver, free palladium or palladium oxide.

Any PdO that might be formed at below 300°C is the result of direct oxidation of the metal and not from the alloy particles. This suggests that a good test for adequate dispersion of the starting silver and palladium powder is to heat a sample of the pelletized mixture to about 275°C and then determine whether PdO is present (e.g., by X-ray diffraction) or whether during the heating oxidation occurred (e.g. by TGA).

Trace 15 (Figure 5) shows characteristic peaks for palladium oxide (PdO) as well as for an alloy of the composition 90 wt% silver and 10 wt% palladium (as closely as can be determined by X-ray diffraction measurement); the shift in the diffraction peaks in the solid solution should be noted. These and other results indicate that the formation of a precipitated palladium oxide on the surface of the 90 Ag/10 Pd alloy particles is responsible for the shifting and delaying of the metal shrinkage until the higher range of temperatures noted in Figure 2.

Even when less than perfect dispersion of the palladium and silver is accomplished, the process of this invention still provides electroding pastes that have less tendency to cause cleavage and delamination in a capacitor than do electroding pastes of the prior art. The "free" palladium (not properly dispersed) will oxidize and expand at about 300—500°C, depending on particle size. However, if free palladium is a small part (less than about 20% by weight of the remaining metal) enough palladium will have alloyed and precipitated as a thin film of protective palladium oxide over the 90 Ag/10 Pd alloy particles to prevent cleaving and cracking.

Experiment 5

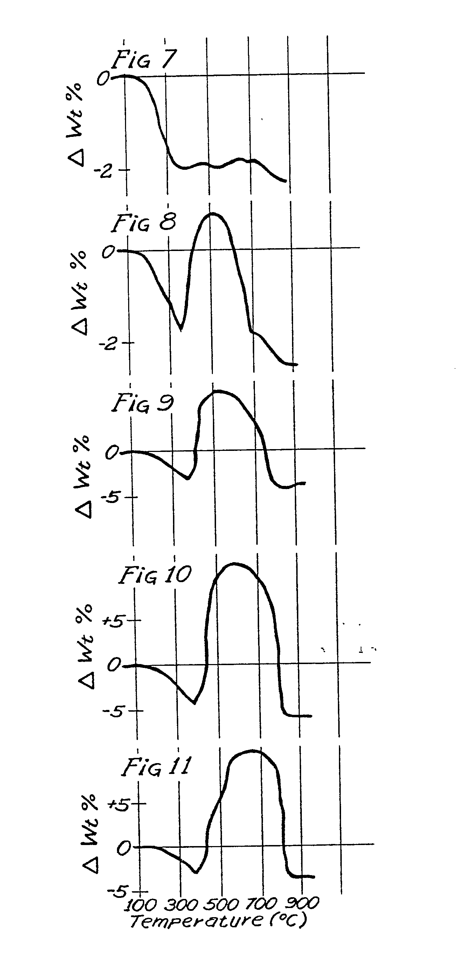

Using a silver powder having a surface area of 2 $m^2$/gm and a palladium powder with surface area of 10 $m^2$/gm, an electroding powder was prepared by the same method as powder batch C (preheated to 500°C) in experiment 4. The surface area of the heat treated powder, as determined by a standard gas monosorb surface area measurement, was 0.75 m²/gm (corresponding to an equivalent spherical particle diameter of 0.70 micron). This material was milled for 8 hours in terpineol and lecithin. Figure 6 shows particle size distribution curves 21 and 22 for, respectively, the heat-treated powder and the heat-treated and milled powder. The powder after milling has a very narrow distribution, almost mono-disperse. This surprising but welcome result is an inherent feature of the powder-producing method of this invention.

Experiment 6

Another group of test pellets was formed containing metal blends 2 to 6 as described in Experiment 1 and Table I. Each one of these not-yet heat treated pellets were then ramp heated, in turn, in a TGA to determine weight change as a function of temperature. This procedure reveals when organic vehicles and binders are burned off and when oxidation or reduction occurs. TGA curves are shown in Figures 7 to 11 for pellets made of blends 2 to 6, respectively.

Experiment 7

Another group of slurries was formed containing metal blends 2 to 6 as described in Experiment 1 and Table I. These slurries were dried at 150°C and the powders were screened. No other heat treatment was effected.

Each powder material was then heated to 325°C for half an hour, cooled, and subjected to X-ray diffraction analysis. The most prominent peaks in the Ag—Pd system were found in the 111 diffraction plane.

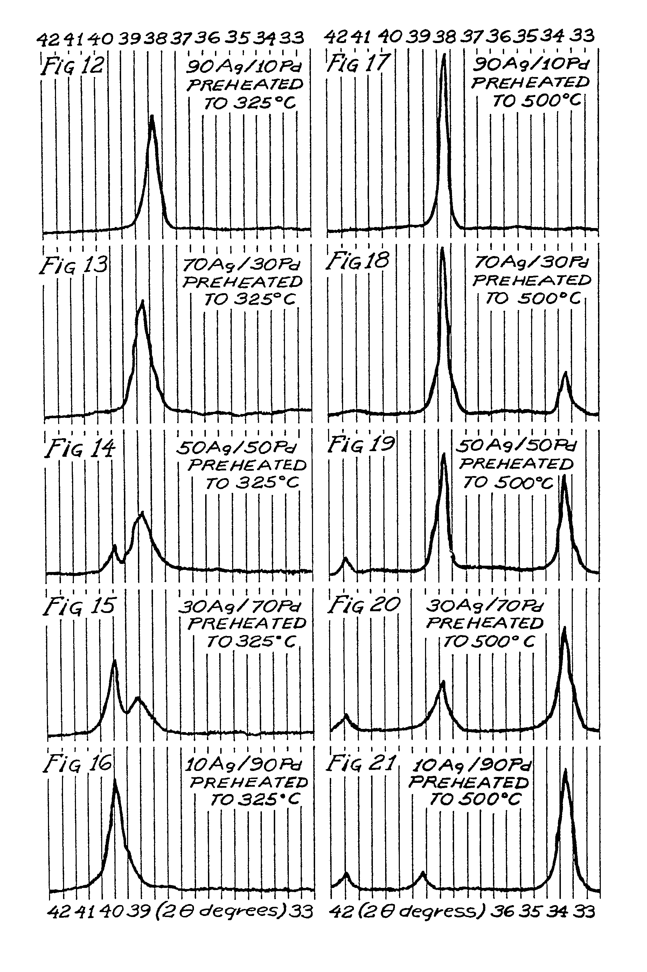

The X-ray diffraction charts of blends 2 to 6, respectively, after such heat treatment at 325°C are shown in Figures 12 to 16. The characteristic "X-ray diffraction angle", given in terms of $2\theta$, is provided in Table II for frequently occurring peaks.

TABLE II

| Composition | X-ray diffraction angle $2\theta$ |
|---|---|
| Pd | 40.1°** |
| 70 Ag/30 Pd* | 38.75°*** |
| 90 Ag/10 Pd* | 38.35°*** |
| Ag | 38.15°*** |
| PdO | 33.8°*** |

*solid solution (alloy)
**angles for 111 diffraction plane
***angle for 101 diffraction plane

Experiment 8

The powders of Experiment 7 were further heated for half an hour at 500°C. Each powder was then resubjected to X-ray diffraction analysis.

The X-ray diffraction charts of the fully heat-treated powders derived from blends 2 to 6, respectively, are shown in Figures 17 to 21.

These experiments strongly indicate that oxygen diffuses into the grains of the Ag/Pd alloy, thereby oxidizing the palladium when the starting alloy contains more than 10% Pd. PdO is then precipitated from the interior to the surfaces of the grains. Confirmation that precipitation of PdO from an Ag/Pd alloy occurs is found in the facts that after heating such alloys to 500°C, X-ray diffraction measurements show strong PdO peaks, while at the same time the diffraction peak of the alloy has shifted down to about 90 Ag/10 Pd alloy. Also supporting PdO precipitation is the fact that the unit cell size for 70 Ag/30 Pd (65 Å³) and that for PdO (49 Å³) are so disparate. The transient existence of a layer of precipitated PdO molecules over the surfaces of the 90 Ag/10 Pd alloy particles is indicated as being responsible for the long delay of sintering of these particles.

Thus, when pure palladium and pure silver powders are thoroughly dispersed and heated in air to about 500°C, alloying occurs first. Oxygen diffuses into the alloy grains. Then some of the palladium oxidizes and the palladium oxide precipitates over the surfaces of the alloy grains preventing sintering. The result is a powder having a PdO phase and a 90 Ag/10 Pd alloy phase. When this powder is used in an electroding paste in a monolithic ceramic capacitor, it exhibits little dimensional changes (see curve 7 in Figure 2) during the firing of the ceramic up to 500°C when a green ceramic is weakest. Up to that temperature, the dimensions of a green ceramic typically change 0.2%. The ceramic begins to sinter above about 500°C and the ceramic bodies begin to grain strength as that point in the ceramic sintering process.

The experimental evidence also suggest that for alloys that are more silver rich than 90 Ag/10 Pd, it is very difficult, if not impossible, to effect oxidation of the palladium and the subsequent precipitation of PdO on the alloy crystal surfaces. In fact, the 90 Ag/10 Pd composition appears to be a particularly stable alloy that is advantageous as a buried electrode in a very low temperature sintering ceramic capacitor, or as a printed conductor or capacitor termination, because silver migration is greatly retarded as compared with pure silver.

As noted above, when a silver powder/palladium powder mixture is heated, the metals are first alloyed before the occurrence of oxidation. The electroding powders of this invention may, therefore, be prepared by heating a preformed Ag/Pd alloy (solid solution) powder to about 500°C. Thus a PdO-coated 90 Ag/10 Pd alloy powder of this invention using as starting materials: 1. a single Ag/Pd alloy powder containing less than 90% by weight of silver, or 2. mixtures of Ag/Pd alloys, for example 95 Ag/5 Pd mixed with 20 Ag/80 Pd; or 3. a mixture of either silver or palladium powder with an alloy powder, for example 85 Ag/15 Pd with palladium powder. By properly adjusting the amounts of each starting ingredient in the above starting mixtures, the composition of the final sintered capacitor electrode may be determined. However, it is preferred to employ a starting mixture of pure palladium powder with pure silver powder, since they are by far the most easily obtained and cost the least. Silver powder having a surface area of less than 6 $m^2/gm$ and, more particularly, 2 $m^2/gm$ is most economical.

It is preferred that the ratio by weight of silver to palladium in the starting materials be at least 30 Ag/70 Pd, because the alloy range is of greatest use today and because for these alloys the invention clearly provides the greatest benefit.

**Claims**

1. A metal electroding powder for use in making monolithic ceramic capacitors, which powder comprises a silver-palladium alloy powder having a composition, by weight, of 90 Ag/10 Pd and having palladium oxide on the surface of the alloy particles.

2. A powder according to claim 1, in which the weight ratio of the total silver to the total palladium (including that present in said oxide) is at least 30 Ag/70 Pd.

3. A powder according to claim 1 or 2, which has a surface area from 0.5 to 2.0 $m^2/gm$.

4. A powder according to any of claims 1 to 3, which has an average particle size of from 0.1 to 2 microns.

5. A method of making a metal electroding powder for use in monolithic ceramic capacitors, which comprises heating in air at about 500°C, a silver-palladium alloy powder containing less than 90% by weight of silver so as to oxidize a portion of the palladium to form palladium oxide at the surface of the alloy particles and to increase the silver content of the alloy until it has a composition, by weight, of 90 Ag/10 Pd.

6. A method according to claim 5, which comprises the further step of mixing the oxidized alloy with an organic liquid vehicle to form an electroding paste.

7. A method according to claim 5 or 6, in which said heating is preceded by mixing a silver powder with a palladium powder and thoroughly dispersing the two metal powders to form a homogeneous mixture, and heating the mixture to about 300°C to form the silver-palladium alloy powder.

8. A method according to claim 7, in which the silver powder has a surface area which is substantially less than that of the palladium powder.

9. A method according to claim 8, in which the surface area of the silver powder is less than 6 $m^2/gm$ and the surface area of the palladium powder is from 8 to 12 $m^2/gm$.

10. A method according to any of claims 7 to 9, in which the alloy powder is comminuted after said heating to about 300°C until its surface area is from 0.5 to 5.0 $m^2/gm$.

11. A method according to any of claims 7 to 10, in which the dispersing of the silver and palladium powders is effected by milling the powders in a liquid vehicle containing a dissolved cationic dispersant that begins to decompose at above 350°C.

12. A method according to any of claims 7 to 9, in which the weight ratio of silver powder to palladium powder is at least 30/70.

13. A method of making a monolithic ceramic capacitor, which comprises:
(a) forming a plurality of layers of a green ceramic composition comprising a mixture of a high-firing-temperature ceramic powder and a low-melting-temperature sintering flux;
(b) depositing a layer of an electroding paste as obtained by the method of claim 6 on all but one of the green ceramic layers;
(c) stacking the green ceramic layers to form a green monolithic ceramic capacitor body having electroding paste between each adjacent pair of ceramic layers; and
(d) sintering the green ceramic body at less than 1200°C.

**Patentansprüche**

1. Metallelektrodenpulver zur Verwendung bei der Herstellung monolithischer keramischer Kondensatoren, wobei das Pulver ein Silber-Palladium-Legierungspulver mit einer gewichtsmäßigen Zusammensetzung von 90 Ag/10 Pd umfaßt und Palladiumoxid auf der Oberfläche der Legierungsteilchen aufweist.

2. Pulver nach Anspruch 1, wobei das Gewichtsverhältnis des gesamten Silbers zu dem gesamten Palladium (einschließlich dem in dem Oxid vorliegenden) mindestens 30 Ag/70 Pd beträgt.

3. Pulver nach Anspruch 1 oder 2, wobei es eine Oberfläche von 0,5 bis 2,0 $m^2/g$ besitzt.

4. Pulver nach einem der Ansprüche 1 bid 3, wobei es eine durchschnittliche Teilchengröße von 0,1 bis 2 μm besitzt.

5. Verfahren zur Herstellung eines Metallelektrodenpulvers zur Verwendung in monolithischen keramischen Kondensatoren, umfassend das Erhitzen an Luft bei etwa 500°C eines Silber-Palladium-Legierungspulvers, das weniger als 90 Gew.-% Silber enthält, um so einen Teil des Palladiums zu oxidieren, um Palladiumoxid an der Oberfläche der Legierungsteilchen zu bilden und den Silbergehalt der Legierung zu erhöhen, bis sie eine gewichtsmäßige Zusammensetzung von 90 Ag/10 Pd besitzt.

6. Verfahren nach Anspruch 5, umfassend die weitere Stufe des Vermischens der oxidierten Legierung mit einem organischen flüssigen Träger, um eine Elektrodenpaste zu bilden.

7. Verfahren nach Anspruch 5 oder 6, wobei dem Erhitzen ein Vermischen eines Silberpulvers mit einem Palladiumpulver und gründliches Dispergieren der zwei Metallpulver zur Bildung einer homogenen Mischung und Erhitzen der Mischung auf etwa 300°C zur Bildung des Silber-Palladium-Legierungspulvers vorangeht.

8. Verfahren nach Anspruch 7, wobei das Silberpulver eine Oberfläche besitzt, die wesentlich kleiner als die des Palladiumpulvers ist.

9. Verfahren nach Anspruch 8, wobei die Oberfläche des Silberpulvers weniger als 6 m²/g und die Oberfläche des Palladiumpulvers 8 bis 12 m²/g beträgt.

10. Verfahren nach einem der Ansprüche 7 bis 9, wobei das Legierungspulver nach dem Erhitzen auf etwa 300°C zerkleinert wird, bis seine Oberfläche 0,5 bis 5,0 m²/g beträgt.

11. Verfahren nach einem der Ansprüche 7 bis 10, wobei das Dispergieren des Silber- und Palladiumpulvers bewirkt wird durch Vermahlen der Pulver in einem flüssigen Träger, der ein gelöstes, kationisches Dispergiermittel enthält, das oberhalb 350°C sich zu zersetzen beginnt.

12. Verfahren nach einem der Ansprüche 7 bis 9, wobei das Gewichtsverhältnis des Silberpulvers zu dem Palladiumpulver wenigstens 30/70 beträgt.

13. Verfahren zur Herstellung eines monolithischen keramischen Kondensators, umfassend:

(a) Bilden einer Vielzahl von Schichten einer grünen keramischen Zusammensetzung, umfassend eine Mischung aus einem Hochbrenntemperatur-Keramikpulver und einem Niederschmelztemperatur-Sinterungsflußmittel;

(b) Aufbringen einer Schicht aus einer gemäß dem Verfahren nach Anspruch 6 erhaltenen Elektrodenpaste auf sämtliche, außer eine der grünen Keramikschichten;

(c) Aufeinanderstapeln der grünen Keramikschichten zur Bildung eines grünen monolithischen, keramischen Kondensatorkörpers mit einer Elektrodenpaste zwischen jedem Paar aneinanderliegender Keramikschichten; und

(d) Sintern des grünen keramischen Körpers bei weniger als 1200°C.

## Revendications

1. Une poudre métallique pour électrodes à utiliser dans la fabrication des condensateurs céramiques monolithiques, ladite poudre comprenant une poudre d'alliage d'argent-palladium ayant une composition, en poids, de 90 Ag/10 Pd et ayant de l'oxyde de palladium sur la surface des particules d'alliage.

2. Une poudre selon la revendication 1, selon laquelle le rapport pondéral entre l'argent total et le palladium total (incluant le palladium présent dans ledit oxyde) est d'au moins 30 Ag/70 Pd.

3. Une poudre selon la revendication 1 ou 2, qui a une surface spécifique de 0,5 à 2,0 m²/g.

4. Une poudre selon l'une quelconque des revendications 1 à 3 qui a une teille moyenne de particules de 0,1 à 2 μm.

5. Une méthode de fabrication d'une poudre métallique pour électrodes à utiliser dans les condensateurs céramiques monolithiques, qui comprend le chauffage dans l'air à environ 500°C d'une poudre d'alliage d'argent-palladium contenant moins de 90% en poids d'argent pour oxyder une portion du palladium pour former de l'oxyde de palladium à la surface des particules d'alliage et pour augmenter la teneur en argent de l'alliage jusqu'à ce que ce dernier ait la composition en poids, de 90 Ag/10 Pd.

6. Une méthode selon la revendication 5 qui comprend encore l'étape de mélange de l'alliage oxydé avec un véhicule liquide organique pour former une pâte pour électrodes.

7. Une méthode selon la revendication 5 ou 6, selon laquelle ledit chauffage est précédé du mélangeage d'une poudre d'argent avec une poudre de palladium et la dispersion uniforme des deux poudres métalliques pour former un mélange homogène, et le chauffage du mélange à environ 300°C pour former la poudre d'alliage d'argent-palla1ium.

8. Une méthode selon la revendication 7, selon laquelle la poudre d'argent a une surface spécifique qui est substantiellement inférieure à celle de la poudre de palladium.

9. Une méthode selon la revendication 8, selon laquelle la surface spécifique de la poudre d'argent est inférieure à 6 m²/g et la surface spécifique de la poudre de palladium est de 8 à 12 m²/g.

10. Une méthode selon l'une quelconque des revendications 7 à 9, selon laquelle la poudre d'alliage est broyée après ledit chauffage à environ 300°C jusqu'à ce que sa surface spécifique soit de 0,5 à 5,0 m²/g.

11. Une méthode selon l'une quelconque des revendications 7 à 10, selon laquelle la dispersion des poudres d'argent et de palladium est effectuée par broyage des poudres dans un véhicule liquide contenant un agent dispersant cationique dissous qui commence à se décomposer à environ 350°C.

12. Une méthode selon l'une quelconque des revendications 7 à 9, selon laquelle le rapport pondéral entre la poudre d'argent et la poudre de palladium est d'au moins 30/70.

13. Une méthode de fabrication d'un condensateur céramique monolithique qui comprend:

(a) la formation de plusieurs couches d'une composition céramique crue comprenant un mélange d'une poudre céramique à température de cuisson élevée et un fondant de frittage à basse température de fusion;

(b) le dépôt d'une couche d'une pâte pour électrodes obtenue par la méthode de la revendication 6 sur la totalité moins une des couches céramiques crues;

(c) l'empilage des couches céramiques crues pour former un corps de condensateur céramique monolithique cru ayant une pâte pour électrodes entre chaque paire adjacente de couches céramiques; et

(d) le frittage du corps céramique cru à une température inférieure à 1 200°C.

Fig 2

Fig 3

Fig 4

Fig 5

Fig 1

Fig 6

X-RAY DIFFRACTION ANGLE
2θ (degrees)

FiG 7

FiG 8

FiG 9

FiG 10

FiG 11

100 300 500 700 900
Temperature (°C)

Fig 12 — 90 Ag/10 Pd PREHEATED TO 325°C

Fig 13 — 70 Ag/30 Pd PREHEATED TO 325°C

Fig 14 — 50 Ag/50 Pd PREHEATED TO 325°C

Fig 15 — 30 Ag/70 Pd PREHEATED TO 325°C

Fig 16 — 10 Ag/90 Pd PREHEATED TO 325°C

Fig 17 — 90 Ag/10 Pd PREHEATED TO 500°C

Fig 18 — 70 Ag/30 Pd PREHEATED TO 500°C

Fig 19 — 50 Ag/50 Pd PREHEATED TO 500°C

Fig 20 — 30 Ag/70 Pd PREHEATED TO 500°C

Fig 21 — 10 Ag/90 Pd PREHEATED TO 500°C

(2θ degrees)